# EUROPÄISCHE PATENTSCHRIFT

(11) **EP 0 850 854 B1**
(45) Veröffentlichungstag und Bekanntmachung des Hinweises auf die Patenterteilung: **17.01.2001**
(21) Anmeldenummer: 97121025.7
(22) Anmeldetag: 29.11.1997
(51) Int. Cl.: B65D 88/74, B60P 3/20

(54) **Grossraumkühlcontainer**
Large capacity refridgerated container
Conteneur frigorifique de grand volume

(30) Priorität: 02.12.1996 DE 19649871
(43) Veröffentlichungstag der Anmeldung: 01.07.1998
(73) Patentinhaber: Waggonbau Elze GmbH & Co. Besitz KG, 31008 Elze (DE)
(72) Erfinder: Kothe, Horst, Ing., 31032 Betheln (DE); Graaff, Wolfgang, Dipl.-Ing., 31134 Hildesheim (DE)
(74) Vertreter: Gosch, Wolf-Dietrich

(56) Entgegenhaltungen:
- DE-A- 4 433 728

## Beschreibung

Die Erfindung betrifft einen Großraumkühlcontainer mit einem von Stirnwand, Türen, Seitenwänden, Deck- und Bodenplatten umschlossenen Innenraum, bei dem die Bodenplatte in Sandwichbauweise mit von Kühlluft durchströmten Kanälen versehen ist, die aus T-Grätingen ausgebildet sind, die auf der oberen Abdeckplatte der Bodenplatte vorgesehen sind, die eine gegenüber einem die Türöffnung nach unten begrenzenden Türunterzug nach unten verlaufende Absenkung aufweist. Derartige Container sind aus der DE 44 33 728 A bekannt. Dort ist ein Kühlcontainer beschrieben, dessen Bodenplatte im Bereich der Tür eine nach unten verlaufende Absenkung abweist.

Derartige Kühlcontainer sind als sogenannten "port hole"-Container weltweit zum Transport von Kühl- und Gefriergut im Einsatz. Während des Transportes wird über die port holes Kühlluft in den Innenraum des Containers zu- bzw. abgeführt, wobei die Kühlluft das Ladegut allseitig entlang der Wandungen des Containers umstreicht.

Es hat sich jedoch gezeigt, daß wegen der relativ starken Bodenplatte mit den daran angeordneten T-Grätings der Innenraum relativ klein und infolge der unterhalb der oberen Eckbeschläge verlaufenden Oberkanten der Türen und der dazugehörigen Türfüllungen die lichte Höhe der Türöffnung vergleichsweise gering war, so daß die für den Be- und Entladevorgang mögliche Stapelhöhe auf den allgemein für die Beladung eines Kühlcontainers verwendeten Paletten begrenzt war.

Aufgabe der vorliegenden Erfindung ist es daher, einen Großraumkühlcontainer der Eingangs genannten Art so zu verbessern, daß sowohl der zur Verfügung stehende Laderaum in seinem Volumen als auch die lichte Höhe der Türen des Containers vergrößert werden können.

Diese Aufgabe wird erfindungsgemäß dadurch gelöst, daß die Bodenplatte in ihrer Gesamtheit, d. h. ihre obere und untere Abdeckplatte gemeinsam gegenüber dem Türunterzug der Türöffnung abgesenkt sind und die T-Grätinge Flansche aufweisen, die mit dem Türunterzug fluchten und die Bodenplatte in Kompaktbauweise mit innenliegenden Trägern ausgebildet ist, die in einem die Bodenplatte ausfüllenden Starrschaum eingebettet sind.

Hierdurch ist es möglich, den Laderaum des Containers bei unveränderten, durch die entsprechenden ISO-Norm festgelegten Außenmaßen um etwa 5 % gegenüber herkömmlichen Containern zu vergrößern, was bei den aufgrund des starken internationalen Wettbewerbs durchsetzbaren vergleichsweise geringen Frachtraten einen erheblichen Zuwachs an der Wirtschaftlichkeit des Containers bedeutet.

Weitere Einzelheiten der Erfindung ergeben sich aus der nachfolgenden ausführlichen
Beschreibung und den beigefügten Zeichnungen, in denen eine bevorzugte Ausführungsform der Erfindung beispielsweise veranschaulicht ist.

### In den Zeichnungen zeigen:

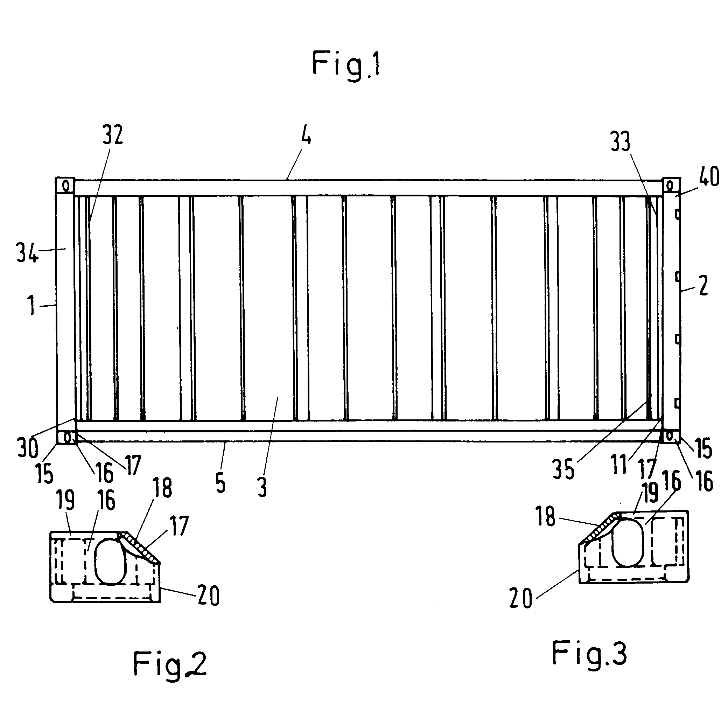

- **Figur 1:**: einen Großraumkühlcontainer in Seitenansicht;
- **Figuren 2 und 3:**: untere Eckbeschläge des Containers in Seitenansicht;

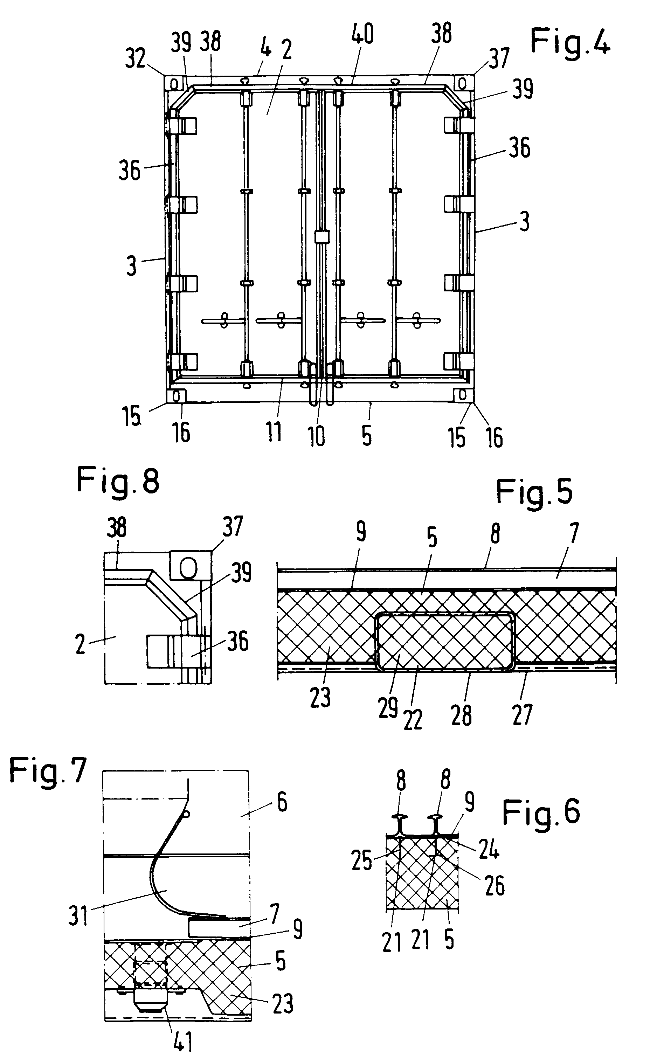

- **Figur 4:**: eine Ansicht der Türseite des Containers;
- **Figur 5:**: einen Längsschnitt durch einen Ausschnitt einer Bodenplatte;
- **Figur 6:**: einen Querschnitt durch einen Ausschnitt einer Bodenplatte;
- **Figur 7:**: einen Schnitt durch einen Ausschnitt einer Bodenplatte mit Luftumleitung;
- **Figur 8:**: eine Teilansicht der oberen Türseite gemäß Figur 4;

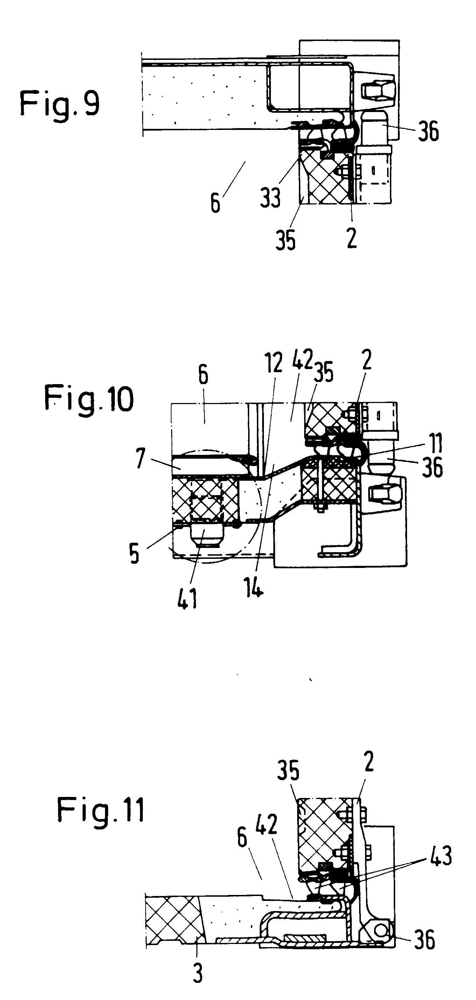

- **Figur 9:**: eine teilgeschnittene Seitenansicht eines oberen Türscharniers;
- **Figur 10:**: eine teilgeschnittene Seitaneinsicht eines unteren Türscharniers im Bereich einer Absenkung der Bodenplatte und
- **Figur 11:**: eine teilgeschnittene Draufsicht auf ein Türscharnier.

Ein erfindungsgemäßer Großraumkühlcontainer besteht im wesentlichen aus einem von Stirnwand 1, Türen 2, Seitenwänden 3, Deck- und Bodenplatten 4, 5 umschlossenen Innenraum 6, bei dem die Bodenplatte 5 in Sandwichbauweise mit von Kühlluft durchströmten Kanälen 7 versehen ist, die aus T-Grätingen 8 ausgebildet (Kastenprofile sind auch möglich) werden und die auf der oberen Abdeckplalte 9 der Bodenplatte 5 vorgesehen sind, wobei die Bodenplatte 5 gegenüber einem die Türöffnung 10 nach unten begrenzenden Türunterzug 11 mit einer nach unten verlaufende Absenkung 12 versehen ist. Die T-Grätinge 8 sind mit Flanschen 13 versehen, die mit dem Türunterzug 11 fluchten und zwischen denen und dem Türunterzug 11 ein Kaltluft durchströmter Freiraum 14 sich erstreckt. Die T-Grätinge 8 überragen die obere Abdeckplatte 9 der Bodenplatte 5 vorzugsweise maximal 30 mm gegenüber 40 mm bei herkömmlichen Containern.

Der Container weist in seinen unteren vier Ecken 15 Eckbeschläge 16 auf, die in ihren den Seitenwänden 3 zugekehrten Bereichen 17 nach unten gerichtete Abschrägungen 18 aufweisen. Diese verlaufen vorzugsweise etwa in Winkeln von ca. 45 Grad zu waagerechten und senkrechten Kanten 19, 20 der Eckbeschläge 16. Hierdurch wird die Absenkung der Bodenplatte 5 erst ermöglicht.

Die Bodenplatte 5 ist in Kompaktbauweise mit innenliegenden Trägern 21, 22 ausgebildet, die in einen die Bodenplatte 5 ausfüllenden Starrschaum 23 hineinragen. Obere Abdeckplatte 9 ist an ihrer den T-Grätingen 8 abgewandten Unterseite 24 mit Bandprofilen 25 oder T-Profilen 26 versehen. Die Bodenplatte 5 weist an ihrer unteren Abdeckplatte 27 in Querrichtungen des Innenraumes 6 verlaufende Kastenträger 28 auf. Hiervon sind aus Stabilitätsgründen mindestens vier in den Starrschaum 23 eingebettet. Zur Erhöhung ihrer Biegesteifigkeit sind die Kastenträger 28 ihrerseits mit einem Starrschaum 29 ausgeschäumt.

Anstelle der Verwendung von Kastenträgern 28 kann die untere Abdeckplatte 27 auch als ein Sickenblech ausgebildet sein, dessen Sicken in Querrichtungen des Innenraumes 6 verlaufen. Diese Sicken haben vorzugsweise eine Tiefe von mindestens 5 mm. um Bauhöhe der Bodenplatte 5 zu sparen.

Die Deckplatte 4 ist mit mindestens einer tiefgezogenen innenliegendenVersteifungssicke (nicht dargestellt) gegen Durchbiegungen und Verwindungen versteift.

Die Stirnwand 1 wird von einem (nicht dargestellten) Kühlgerät von maximal 336mm Stärke ausgebildet, das in einem Rahmen angeordnet und so ausgelegt ist, daß keines seiner Bauteile über die durch ISO-Norm festgelegten äußeren Abmessungen eines Containers hinausragt. ausgebildet. Das Kühlgerät ist an einer der Bodenplatte 5 zugewandten Unterkante 30 der Stirnwand 1 mit einer von Kühlluft durchströmten Luftumleitung 31 (einer sogenannten "curved kick-plate") versehen, durch die die Kühlluft aus dem Kühlgerät in die Kanäle 7 der Bodenplatte 5 eingeleitet wird und von dort in Bereiche der Türen 2, der senkrechten Stirnwand 1 und die Seitenwände 3 umgeleitet werden kann. Sowohl die Stirnwand 1 als auch die den Innenraum 6 verschließenden Türen 2 sind an ihren den Innenraum 6 zugekehrten Innenflächen mit senkrecht in die Innenflächen eingesenkten Sicken 35 versehen, die senkrecht verlaufen und die gegenüber einer ihnen angelagerten Ladung von Kühlluft durchströmte Kanäle ausbilden. Die Innenflächen können auch nach innen gerichtete tiefgezogenen Sicken ausbilden. Die Seitenwände 3 sind in ihren den Türen zugewandten Kantenbereichen mit Einsenkungen 42 versehen, die im Bereich der dort vorgesehenen Türdichtungen 43 von Kühlluft durchströmte Kanäle ausbilden. Da der Bereich der Türdichtungen 43 in einem Container immer am wärmsten ist, ist hier die Zuführung von Kühlluft besonders vorteilhaft.

Die Türen 2 sind mit außenliegenden Scharnieren 36 versehen, die die Türen in Richtung auf ihre Außenseiten nach hinten überragen. Hierdurch ist es möglich, die Türen 2 beim Öffnen so vollständig aufzuklappen, daß sie bei der Beladung des Innenraumes 2 beispielsweise bei Verwendung eines Gabelstaplers nicht beschädigt werden können. Dabei beträgt der Rücksprung zu den hinteren Eckbeschlägen maximal 55 mm, so daß die Türen optimal gegen Querrackingkräfte geschützt sind und der Öffnungswinkel von 370° erhalten bleibt.

Die Türen 2 weisen im Bereich der ihnen benachbarten oberen Eckbeschläge 37 des Containers gemeinsam mit ihren Füllungen 38 Anschrägungen 39 auf, durch die die lichte Höhe zwischen Türunterzug 11 und oberer Begrenzung 40 des Innenraumes vergrößert wird. Hierdurch kann beim Be- und Entladevorgang die volle Höhe dadurch ausgenutzt werden, daß der Gabelstapler über den Türunterzug 11 in den Innenraum 6 einfahren muß und erst dort die hinter den unteren Eckbeschlägen 16 beginnende Absenkung 12 zu erreichen und zum Handling der Ladung genügend Spielraum verbleibt.

Die Bodenplatte 5 ist mit einer Schwitzwasser aus dem Laderaum ableitenden und das Eindringen von Wasser und Schmutz von außen verhindernden selbsttätigen Entwässerungsvorrichtung 41 versehen.

## Patentansprüche

1. Großraumkühlcontainer mit einem von Stirnwand (1), Türen (2), Seitenwänden (3), Deck- und Bodenplatten (4, 5) umschlossenen Innenraum (6), bei dem die Bodenplatte (5) in Sandwichbauweise mit von Kühlluft durchströmten Kanälen (7) versehen ist, die aus T-Grätingen (8) oder Hohlprofilen ausgebildet sind, die auf der oberen Abdeckplatte (9) der Bodenplatte (5) vorgesehen sind, und bei dem die Bodenplatte (5) eine gegenüber einem die Türöffnung (10) nach unten begrenzenden Türunterzug (11) nach unten verlaufende Absenkung (12) aufweist, dadurch gekennzeichnet, daß die Bodenplatte (5) in ihrer Gesamtheit, d. h. ihre obere (9) und untere (27)Abdeckplatte gemeinsam gegenüber dem Türunterzug (11) der Türöffnung (10) abgesenkt sind und die T-Grätinge (8) Flansche aufweisen, die mit dem Türunterzug (11) fluchten und die Bodenplatte (5) in Kompaktbauweise mit innenliegenden Trägern (21, 22) ausgebildet ist, die in einem die Bodenplatte (5) ausfüllenden Starrschaum (29) eingebettet sind.

2. Großraumkühlcontainer nach Anspruch 1, dadurch gekennzeichnet, daß die T-Grätinge (8) die obere Abdeckplatte (9) um maximal 30 mm überragen.

3. Großraumkühlcontainer nach Anspruch 1 oder 2, dadurch gekennzeichnet, daß er an seinen unteren vier Ecken (15) mit Eckbeschlägen (16) versehen ist, die in ihren den Seitenwänden (3) zugekehrten Bereichen (17) mit nach unten gerichteten Abschrägungen (18) versehen sind.

4. Großraumkühlcontainer nach Anspruch 1 bis 3, dadurch gekennzeichnet, daß die Abschrägungen (18) in Winkeln von ca. 45 Grad zu waagerechten und senkrechten Kanten (19,20) der Eckbeschläge (16) verlaufen.

5. Großraumkühlcontainer nach Anspruch 1 bis 4, dadurch gekennzeichnet, daß die obere Abdeckplatte (9) an ihrer den T-Grätingen (8) abgewandten Unterseite (24) mit Bandprofilen (25) oder T-Profilen (26) versehen ist.

6. Großraumkühlcontainer nach Anspruch 1 bis 5, dadurch gekennzeichnet, daß die Bodenplatte (5) an ihrer unteren Abdeckplatte (27) mit in Querrichtungen des Innenraumes (6) verlaufenden Kastenträgern (28) versehen ist.

7. Großraumkühlcontainer nach Anspruch 1 bis 6, dadurch gekennzeichnet, daß die Bodenplatte (5) mit mindestens vier Kastenträgern (28) versehen ist.

8. Großraumkühlcontainer nach Anspruch 1 bis 7, dadurch gekennzeichnet, daß die Kastenträger (28) mit einem Starrschaum (29) ausgeschäumt sind.

9. Großraumkühlcontainer nach Anspruch 1 bis 5, dadurch gekennzeichnet, daß die untere Abdeckplatte (27) als ein mit in Querrichtungen des Innenraumes (6) verlaufenden Sicken (34) versehenes Sickenblech ausgebildet ist.

10. Großraumkühlcontainer nach Anspruch 9, dadurch gekennzeichnet, daß das Sickenblech Sickentiefen von mindestens 5 mm aufweist.

11. Großraumkühlcontainer nach Anspruch 1 bis 10, dadurch gekennzeichnet, daß die Stirnwand (1) von einem Kühlgerät gebildet und die Luftaustrittsöffnungen so angeordnet sind, daß eine die aus dem Gerät ausströmende Kühlluft umleitende, benachbart der Bodenplatte (5) angeordnete Luftumleitung (31) aufweist.

12. Großraumkühlcontainer nach Anspruch 1 oder 2, dadurch gekennzeichnet, daß die Stirnwand (1) und die den Innenraum (6) verschließenden Türen (2) an ihren dem Innenraum (6) zugekehrten Innenflächen mit Sicken (35) versehen sind, die in die Innenflächen eingesenkt sind und gegenüber einer ihnen angelagerten Ladung von Kühlluft durchströmte Kanäle oder tiefgezogene, nach innen gerichtete Sicken ausbilden.

13. Großraumkühlcontainer nach Anspruch 1 bis 12, dadurch gekennzeichnet, daß die Türen (2) mit außenliegenden Scharnieren (36) versehen sind, die die Türen in Richtung auf ihre Außenseiten nach hinten überragen

14. Großraumkühlcontainer nach Anspruch 1 bis 13, dadurch gekennzeichnet, daß im Bereich der ihnen benachbarten oberen Eckbeschläge (37) die Türen (2) und ihre Füllungen (38) obere, eine lichte Höhe zwischen dem Türunterzug (11) und der ihnen gegenüberliegenden oberen Begrenzung (40) des Innenraumes (6) vergrößernde Anschrägungen (39) aufweisen.

15. Großraumkühlcontainer nach Anspruch 1 bis 14, dadurch gekennzeichnet, daß die Bodenplatte (5) mit mindestens einer Schwitzwasser aus dem Innenraum (6) ableitenden und das Eindringen von Wasser und Schmutz von außen verhindernden selbsttätigen Entwässerungsvorrichtung (41) versehen ist.

## Claims

1. A high capacity refrigerated container having an interior (6), which is bounded by an end wall (1), doors (2), side walls (3), and roof and floor plates (4,5), the sandwich construction floor plate (5) being provided with channels (7) through which cooling air flows and which are constructed from T-gratings (8) or hollow profiles which are provided on the top cover plate (9) of the floor plate (5), the floor plate (5) having a sunken portion (12) which extends downwards relatively to a door transom (11) which forms the bottom limit of the door opening (10), characterised in that the floor plate (5) is sunk in its entirety, i.e., its top plate (9) and bottom cover plate (27) are jointly sunken with respect to the transom (11) of the door opening (10) and the T-gratings (8) have flanges which are in alignment with the door transom (11) and the floor plate (5) is of compact construction with internal girders (21,22) which are embedded in a rigid foam (29) filling the floor plate (5).

2. A high capacity refrigerated container according to Claim 1, characterised in that the T-gratings (8) project a maximum of 30 mm above the top cover plate (9).

3. A high capacity refrigerated container according to Claim 1 or 2, characterised in that its bottom four corners (15) are provided with corner fittings (16) which, in their zones (17) facing the side walls (3), are provided with downwardly extending bevels (18).

4. A high capacity refrigerated container according to Claims 1 to 3, characterised in that the bevels (18) extend at angles of about 45° to horizontal and vertical edges (19,20) of the corner fittings (16).

5. A high capacity refrigerated container according to Claims 1 to 4, characterised in that the top cover plate (9) is provided with band profiles (25) or T-profiles (26) at its underside (24) remote from the T-gratings (8).

6. A high capacity refrigerated container according to Claims 1 to 5, characterised in that the floor plate (5) is provided, at its bottom cover plate (27), with box girders (28) extending in transverse directions of the interior (6).

7. A high capacity refrigerated container according to Claims 1 to 6, characterised in that the floor plate (5) is provided with at least four box girders (28) .

8. A high capacity refrigerated container according to Claims 1 to 7, characterised in that the box girders (28) are filled with a rigid foam (29).

9. A high capacity refrigerated container according to Claims 1 to 5, characterised in that the bottom cover plate (27) is constructed in the form of a corrugated plate provided with corrugations (34) extending in transverse directions of the interior (6).

10. A high capacity refrigerated container according to Claim 9, characterised in that the corrugated plate has corrugation depths of at least 5 mm.

11. A high capacity refrigerated container according to Claims 1 to 10, characterised in that the end wall (1) is formed by a refrigerating unit and the air exit apertures are so arranged as to have a curved kick-plate (31) which is disposed adjacent the floor plate (5) and which guides the cooling air flowing out of the refrigerating unit.

12. A high capacity refrigerated container according to Claim 1 or 2, characterised in that the end wall (1) and the doors (2) which close the interior (6) are provided with corrugations (35) at their inner surfaces facing the interior (6), said corrugations being sunk in the inner surfaces and forming, with respect to a load adjacent thereto, channels through which cooling air flows, or deep-drawn inwardly directed corrugations.

13. A high capacity refrigerated container according to Claims 1 to 12, characterised in that the doors (2) are provided with external hinges (36) which project rearwardly over the doors in the direction of their outsides.

14. A high capacity refrigerated container according to Claims 1 to 13, characterised in that in the region of their adjacent top corner fittings (37) the doors (2) and their fillings (38) have top bevels (39) which increase the clearance between the door transom (11) and the opposite top boundary (40) of the interior (6).

15. A high capacity refrigerated container according to Claims 1 to 14, characterised in that the floor plate (5) is provided with at least one automatic drainage device (41) which discharges condensate from the interior (6) and prevents the penetration of water and dirt from the exterior.

## Revendications

1. Conteneur frigorifique de grand volume comportant un espace intérieur (6) fermé par une paroi frontale (1), des portes (2), des parois latérales (3), une plaque de toit (4) et une plaque de fond (5), dans lequel la plaque de fond (5) en construction sandwich est munie de canaux (7) dans lesquels passe de l'air de refroidissement et qui sont conçus à partir de grillages en T (8) ou de profilés creux qui sont prévus sur la plaque de couverture supérieure (9) de la plaque de fond (5) et dans lequel la plaque de fond (5) comporte un abaissement (12) qui s'étend vers le bas par rapport à une solive de porte (11) limitant l'ouverture de porte (10) en bas, caractérisé en ce que la plaque de fond (5) dans son ensemble, c'est-à-dire sa plaque de couverture supérieure (9) et sa plaque de couverture inférieure (27) sont abaissées conjointement par rapport à la solive de porte (11) de l'ouverture de porte (10) et en ce que les grillages en T (8) comportent des brides qui sont alignées avec la solive de porte (11), la plaque de fond (5) étant conçue selon une construction compacte avec des supports (21, 22) à l'intérieur qui sont noyés dans une mousse durcissante (29) remplissant la plaque de fond (5).

2. Conteneur frigorifique de grand volume selon la revendication 1, caractérisé en ce que les grillages en T (8) dépassent de 30 mm au maximum de la plaque de couverture supérieure (9).

3. Conteneur frigorifique de grand volume selon la revendication 1 ou 2, caractérisé en ce qu'il est muni en ses quatre coins inférieurs (15) de garnitures d'équerres (16) qui sont munies dans leurs zones (17) proches des parois latérales (3) de biseaux (18) dirigés vers le bas.

4. Conteneur frigorifique de grand volume selon les revendications 1 à 3, caractérisé en ce que les biseaux (18) s'étendent selon des angles de 45 degrés environ par rapport à des arêtes horizontales et verticales (19, 20) des garnitures d'équerres (16).

5. Conteneur frigorifique de grand volume selon les revendications 1 à 4, caractérisé en ce que la plaque de couverture supérieure (9) est munie sur son dessous (24) éloigné des grillages en T (8) de profilés en bande (25) ou de profilés en T (26).

6. Conteneur frigorifique de grand volume selon les revendications 1 à 5, caractérisé en ce que la plaque de fond (5) est munie sur sa plaque de couverture inférieure (27) de poutres en caissons (28) s'étendant dans des directions transversales de l'espace intérieur (6).

7. Conteneur frigorifique de grand volume selon les revendications 1 à 6, caractérisé en ce que la plaque de fond (5) est munie d'au moins quatre poutres en caissons (28) .

8. Conteneur frigorifique de grand volume selon les revendications 1 à 7, caractérisé en ce que les poutres en caissons (28) sont faites avec une mousse durcissante (29).

9. Conteneur frigorifique de grand volume selon les revendications 1 à 5, caractérisé en ce que la plaque de couverture inférieure (27) est conçue sous forme de tôle à moulures munie de moulures (34) s'étendant dans des directions transversales de l'espace intérieur (6).

10. Conteneur frigorifique de grand volume selon la revendication 9, caractérisé en ce que la tôle à moulures a des profondeurs de moulures d'au moins 5 mm.

11. Conteneur frigorifique de grand volume selon les revendications 1 à 10, caractérisé en ce que la paroi frontale (1) est formée par un appareil réfrigérant et en ce que les orifices de sortie d'air sont agencés de telle sorte que l'un comporte une déviation d'air (31) agencée près de la plaque de fond (5) et déviant l'air de refroidissement sortant de l'appareil.

12. Conteneur frigorifique de grand volume selon la revendication 1 ou 2, caractérisé en ce que la paroi frontale (1) et les portes (2) fermant l'espace intérieur (6) sont munies sur leurs surfaces intérieures proches de l'espace intérieur (6) de moulures (35) qui sont creusées dans les surfaces intérieures et qui forment par rapport à un chargement placé contre celles-ci des canaux dans lesquels passe de l'air de refroidissement ou des moulures profondément embouties dirigées vers l'intérieur.

13. Conteneur frigorifique de grand volume selon les revendications 1 à 12, caractérisé en ce que les portes (2) sont munies de charnières (36) extérieures qui dépassent des portes vers l'arrière en direction de leurs côtés extérieurs.

14. Conteneur frigorifique de grand volume selon les revendications 1 à 13, caractérisé en ce que, dans la zone des garnitures d'équerres supérieures (37) voisines des portes, les portes (2) et leurs rembourrages (38) comportent des biseaux supérieurs (39) qui agrandissent la hauteur libre entre la solive de porte (11) et la limitation supérieure (40), faisant face à cette solive de porte, de l'espace intérieur (6).

15. Conteneur frigorifique de grand volume selon les revendications 1 à 14, caractérisé en ce que la plaque de fond (5) est munie d'au moins un dispositif de drainage (41) automatique évacuant l'eau de condensation hors de l'espace intérieur (6) et empêchant l'entrée d'eau et de saletés de l'extérieur.
